# EUROPÄISCHE PATENTANMELDUNG

(11) **EP 3 376 714 A1**
(43) Veröffentlichungstag der Anmeldung: **19.09.2018**
(21) Anmeldenummer: 18160512.2
(22) Anmeldetag: 07.03.2018
(51) Int. Cl.: H04L 12/28

(54) **DATEN-MANAGEMENT-SYSTEM UND VERFAHREN ZUM REGELN ODER STEUERN EINES HAUSHALTSGERÄTS**

(30) Priorität: 16.03.2017 DE 102017105584
(71) Anmelder: Miele & Cie. KG, 33332 Gütersloh (DE)
(72) Erfinder: Langhammer, Nils, 33415 Verl (DE)

(57) **Zusammenfassung**

Die Erfindung betrifft ein Daten-Management-System (1) mit einem Kommunikationsmodul (11), das ausgebildet ist, mit einer Mehrzahl an Haushaltsgeräten (2) zu kommunizieren, und mit einer Regel- oder Steuereinheit (12), die ausgebildet ist, mindestens eines der Mehrzahl an Haushaltsgeräten (2) zu regeln oder zu steuern, und mit einer Schnittstelle (13). Das Daten-Management-System (1) ist ausgebildet, über die Schnittstelle (13) mit einem elektrischen Eingabegerät (3) drahtlos zu kommunizieren, über das die Regel- oder Steuereinheit (12) konfigurierbar ist. Ferner betrifft die Erfindung ein Verfahren zum Regeln oder Steuern eines Haushaltsgeräts (2), bei dem ein Haushaltsgerät (2) mittels des Daten-Management-Systems (1) geregelt oder gesteuert wird.

## Beschreibung

Die Erfindung betrifft ein Daten-Management-System und ein Verfahren zum Regeln oder Steuern eines Haushaltsgeräts. Durch Vernetzung von Haushaltsgeräten mittels eines Daten-Management-Systems kann ein Verbund aus mehreren Haushaltsgeräten gebildet werden, deren Eigenschaften sich gezielt kombinieren lassen. Es besteht jedoch ein Bedarf, individuelle Wünsche für eine Kombination der Haushaltsgeräte zu berücksichtigen.

Der Erfindung stellt sich somit das Problem, ein Daten-Management-System und ein Verfahren zum Regeln oder Steuern eines Haushaltsgeräts bereitzustellen, bei denen individuelle Nutzerwünsche berücksichtigt werden.

Erfindungsgemäß wird dieses Problem durch ein Daten-Management-System mit den Merkmalen des Patentanspruchs 1 und ein Verfahren mit den Merkmalen des Patentanspruchs 2 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einer Kombination einer Mehrzahl von Haushaltsgeräten zu einem Verbund darin, dass ein Nutzer den Verbund nach seinen individuellen Wünschen einfach und kostengünstig konfigurieren kann. Es sind keine festen Regeln in der Regel- oder Steuereinrichtung hinterlegt, vielmehr können Regeln von dem Nutzer individuell erstellt und/oder angepasst werden.

Die Erfindung betrifft ein Daten-Management-System mit einem Kommunikationsmodul, das ausgebildet ist, mit einer Mehrzahl an Haushaltsgeräten zu kommunizieren, und mit einer Regel-oder Steuereinheit, die ausgebildet ist, mindestens eines der Mehrzahl an Hausgeräten zu regeln oder zu steuern, und mit einer Schnittstelle, wobei das Daten-Management-System ausgebildet ist, über die Schnittstelle mit einem elektrischen Eingabegerät drahtlos zu kommunizieren, über das die Regel- oder Steuereinheit konfigurierbar ist.

Die einzelnen Haushaltsgeräte benötigen daher keine bzw. nur eine geringfügige Ausstattung mit Logik bzw. Sensorik. Dadurch können die Kosten vergleichsweise gering gehalten werden. Ferner kann durch gezielte Kombination von Eigenschaften einzelner Haushaltsgeräte von dem Nutzer der Einsatzzweck der Haushaltsgeräte gesteigert werden. Das Kommunikationsmodul ist vorzugsweise ausgebildet, mit der Mehrzahl an Haushaltsgeräten bidirektional zu kommunizieren. Ferner ist es bevorzugt ausgebildet, mit der Mehrzahl an Haushaltsgeräten drahtlos zu kommunizieren. Die Haushaltsgeräte sind vorzugweise ebenfalls entsprechend ausgelegt.

Das Daten-Management-System kann beispielsweise als Cloud Computing System, auch als Rechnerwolke bezeichnet, ausgebildet sein. Bevorzugt ist dieses System in Form einer so genannten Middleware Plattform verwirklicht.

Weiterhin betrifft die Erfindung ein Verfahren zum Regeln oder Steuern eines Haushaltsgeräts, bei dem ein Haushaltsgerät mittels des vorstehenden Daten-Management-Systems geregelt oder gesteuert wird. Vorzugsweise wird ein Haushaltsgerät mittels des Verfahrens geregelt oder gesteuert. Es können aber auch zwei, drei oder mehr Haushaltsgeräte mittels des Verfahrens geregelt oder gesteuert werden. Die Anzahl an geregelten oder gesteuerten Haushaltsgeräten hängt von der Konfiguration der Regel- oder Steuereinheit ab, die von dem Nutzer anhand des elektrischen Eingabegeräts vorgenommen ist.

Die Mehrzahl an Haushaltsgeräten umfasst mindestens zwei Haushaltsgeräte. Die Mehrzahl an Haushaltsgeräten bildet einen Verbund. Der Verbund stellte eine Komponente in dem Verfahren dar, während das Daten-Management-System eine weitere Komponente darstellt und weiterhin das elektrische Eingabegerät eine noch weitere Komponente darstellt. Das elektrische Eingabegerät dient als Konfigurationseinrichtung für den Nutzer zum Konfigurieren der Regel- oder Steuereinheit des Daten-Management-Systems. Das elektrische Eingabegerät ist vorzugsweise ein Mobiltelefon oder ein Computer wie beispielsweise ein Tablet oder Laptop. Das elektrische Eingabegerät ist bevorzugt zur drahtlosen Kommunikation ausgebildet. Besonders bevorzugt ist das elektrische Eingabegerät ein Smartphone.

In einer bevorzugten Ausführungsform kommuniziert ein erstes Haushaltsgerät der Mehrzahl an Haushaltsgeräten mit dem Kommunikationsmodul des Daten-Management-Systems und wird ein zweites Haushaltsgerät der Mehrzahl an Haushaltsgeräten mittels der Regel- oder Steuereinheit geregelt oder gesteuert, die über das elektrische Eingabegerät konfiguriert wird und/oder ist.

Bevorzugt sendet ein erstes Haushaltsgerät der Mehrzahl an Haushaltsgeräten bei Änderung seines Betriebszustands eine Statusmeldung an das Daten-Management-System und sendet das Daten-Management-System in Abhängigkeit der Statusmeldung einen Regel- oder Steuerbefehl an ein zweites Haushaltsgerät der Mehrzahl der Haushaltsgeräte. Das Senden der Statusmeldung des ersten Haushaltsgeräts an das Daten-Management-System kann aber muss nicht ein Senden des Regel- oder Steuerbefehls an das zweite Haushaltsgerät auslösen. Vielmehr hängt das Senden des Regel- oder Steuerbefehls an das zweite Haushaltsgerät davon ab, ob für die Statusmeldung in der Regel- oder Steuereinheit des Daten-Management-Systems ein an das zweite Haushaltsgerät zu sendender Regel- oder Steuerbefehl konfiguriert und/oder hinterlegt ist.

Bevorzugt ist der Regel- oder Steuerbefehl anhand über die Schnittstelle drahtlos empfangener Daten des elektrischen Eingabegeräts konfiguriert. Beispielsweise ist auf dem elektrischen Eingabegerät eine Anwendungssoftware, die üblicherweise auch als so genannte App bezeichnet wird, betreibbar. Über die App kann der Nutzer die Regel- oder Steuereinheit mittels Datenübertragung über die Schnittstelle konfigurieren. Der Nutzer kann mittels des elektrischen Eingabegeräts einen oder mehrere Steuer- oder Regelbefehle erstellen und in der Regel- oder Steuereinheit hinterlegen. Alternativ oder zusätzlich kann der Nutzer über das elektrische Eingabegerät einen in der Regel- oder Steuereinheit des Daten-Management-Systems hinterlegten Regel- oder Steuerbefehl ändern und/oder löschen.

In einer bevorzugten Ausführungsform wird der Regel- oder Steuerbefehl in dem Daten-Management-System ausführbar gespeichert, bis er durch über die Schnittstelle empfangene Daten des elektrischen Eingabegeräts geändert oder gelöscht wird.

Bevorzugt ist die Mehrzahl an Haushaltsgeräten ausgewählt aus der Gruppe, bestehend aus Waschmaschine, Waschtrockner, Trockner, Geschirrspüler, Backofen, Dampfgarer und/oder Dunstabzugshaube.

Die Regel- oder Steuereinheit regelt oder steuert bevorzugt einen Betriebszustand des zweiten Haushaltsgeräts der Mehrzahl der Haushaltsgeräte in Abhängigkeit eines Betriebszustands des ersten Haushaltsgeräts der Mehrzahl der Haushaltsgeräte. Bevorzugter wird mit Beginn eines Betriebs des ersten Haushaltsgeräts ein Betrieb des zweiten Haushaltsgeräts begonnen. Alternativ bevorzugt wird mit Ende des Betriebs des ersten Haushaltsgeräts ein Betrieb des zweiten Haushaltsgeräts begonnen. Vorzugsweise endet der Betrieb des zweiten Haushaltsgeräts, der mit Beginn oder mit Ende des Betriebs des ersten Haushaltsgeräts begonnen wird, nach Ablauf einer vorbestimmten Zeit. Die vorbestimmte Zeit kann in dem Daten-Management-System über das elektrische Eingabegerät hinterlegt werden und/oder sein. Die vorbestimmte Zeit kann alternativ bevorzugt von der Art und/oder der Dauer des Betriebs des ersten Haushaltsgeräts oder von einem Messparameter abhängen, der an einem der beiden oder an beiden Haushaltsgeräten vorliegt.

In einer bevorzugten Ausführungsform ist das zweite Haushaltsgerät die Dunstabzugshaube. Eigenschaften der Dunstabzugshaube können mit Eigenschaften der Waschmaschine, des Waschtrockners, des Trockners, des Geschirrspülers, des Backofens und/oder des Dampfgarers kombiniert werden, so dass ihr Einsatzzweck optimiert wird. Beispielsweise kann durch die Kombination eine Geruchsbelästigung und/oder vorliegende Luftfeuchtigkeit reduziert werden. Dazu befindet sich die Dunstabzugshaube vorteilhaft in dem gleichen Raum bzw. benachbart zu dem ersten Haushaltsgerät, um ihre Wirkung entfalten zu können.

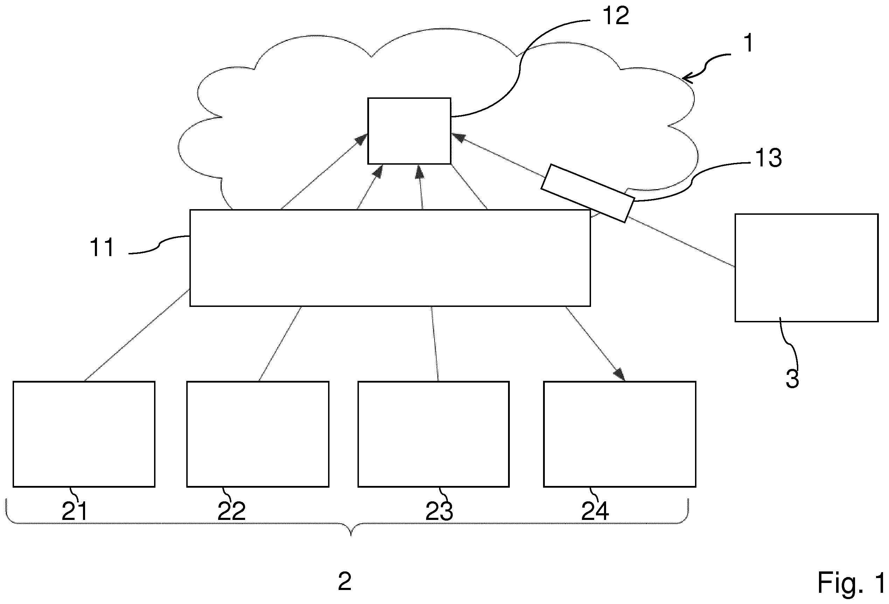

Ein Ausführungsbeispiel der Erfindung ist in den Zeichnungen rein schematisch dargestellt und wird nachfolgend näher beschrieben. Es zeigt
- Fig. 1: schematisch ein Daten-Management-System, das mit einer Mehrzahl an Haushaltsgeräten und einem elektrischen Eingabegerät in Verbindung steht.

Fig. 1 zeigt schematisch ein Daten-Management-System 1, das mit einer Mehrzahl an Haushaltsgeräten 2 und einem elektrischen Eingabegerät 3 in Verbindung steht. Das Daten-Management-System 1 weist ein Kommunikationsmodul 11, eine Regel- oder Steuereinheit 12 und eine Schnittstelle 13 auf. Das Kommunikationsmodul 11 ist ausgebildet, mit einer Mehrzahl an Haushaltsgeräten 2 zu kommunizieren. Die Haushaltsgeräte 2 sind in diesem konkreten Ausführungsbeispiel ein Dampfgarer 21, ein Backofen 22, ein Geschirrspüler 23 und eine Dunstabzugshaube 24. Die Regel- oder Steuereinheit 12 ist ausgebildet, die Dunstabzugshaube 24 zu regeln oder zu steuern. Der Dampfgarer 21, der Backofen 22, der Geschirrspüler 23 sind derart ausgebildet, dass sie jeweils bei Änderung ihres Betriebszustands eine Statusmeldung an das Daten-Management-System 1 senden. Das Daten-Management-System 1 ist weiterhin ausgebildet, über die Schnittstelle 13 mit einem elektrischen Eingabegerät 3 drahtlos zu kommunizieren. Über das elektrische Eingabegerät 3 ist die Regel- oder Steuereinheit 12 konfigurierbar. Ein Nutzer des elektrischen Eingabegeräts 3 kann beispielsweise über eine App einen oder mehrere Regel- oder Steuerbefehle konfigurieren und in der Regel- oder Steuereinheit 12 hinterlegen. Zudem kann er in der Regel- oder Steuereinheit hinterlegte Regel- oder Steuerbefehle ändern und/oder löschen. Das Daten-Management-System 1 ist ausgelegt, den Regel- oder Steuerbefehl zu speichern und/ auszuführen, bis er durch über die Schnittstelle 13 empfangene Daten des elektrischen Eingabegeräts 3 geändert oder gelöscht wird.

Bei Betrieb wird über das Daten-Management-System 1 ein Verfahren zum Regeln oder Steuern eines der Haushaltsgeräte 2, in diesem Falle der Dunstabzugshaube 24, durchgeführt. Die Dunstabzugshaube 24 wird mittels des Daten-Management-Systems 1 geregelt oder gesteuert. Der Dampfgarer 21, der Backofen 22 und der Geschirrspüler 23 senden an das Daten-Management-System 1 eine Statusmeldung bei Änderung ihres Betriebszustands. In Abhängigkeit der Statusmeldung wird ein Regel- oder Steuerbefehl an die Dunstabzugshaube 24 gesendet. Ob ein Regel- oder Steuerbefehl gesendet wird, hängt von der durch das elektrische Eingabegerät 3 vorgenommenen Konfiguration der Regel- oder Steuereinheit 12 ab. Beispielsweise hat ein Nutzer über das elektrische Eingabegerät 3 die Regel- oder Steuereinheit 12 folgendermaßen konfiguriert: Im Falle eines Starts eines Programmes "Pyrolyse" bei dem Backofen 22, bei Programmende des Geschirrspülers 23 mit automatisierter Türöffnung und bei Türöffnung des Dampfgareres 21 wird die Dunstabzugshaube 24 automatisch aktiviert. Senden der Dampfgarer 21 und der Geschirrspüler 23 bei Türöffnung eine entsprechende Statusmeldung an das Daten-Management-System 1, wird die Dunstabzugshaube 24 mittels eines Steuer- oder Regelbefehls von der Regel- oder Steuereinheit 12 automatisch aktiviert. Sendet der Backofen 22 eine Statusmeldung an das Daten-Management-System 1, dass das Programm "Pyrolyse" gestartet wird, wird die Dunstabzugshaube 24 mittels eines Steuer- oder Regelbefehls von der Regel- oder Steuereinheit 12 automatisch aktiviert.

### Bezugszeichenliste

- 1: Daten-Management-System
- 11: Kommunikationsmodul
- 12: Regel- oder Steuereinheit
- 13: Schnittstelle
- 2: Haushaltsgeräte
- 21: Dampfgarer
- 22: Backofen
- 23: Geschirrspüler
- 24: Dunstabzugshaube
- 3: elektrisches Eingabegerät

## Patentansprüche

1. Daten-Management-System (1) mit einem Kommunikationsmodul (11), das ausgebildet ist, mit einer Mehrzahl an Haushaltsgeräten (2) zu kommunizieren, und mit einer Regel-oder Steuereinheit (12), die ausgebildet ist, mindestens eines der Mehrzahl an Haushaltsgeräten (2) zu regeln oder zu steuern, und mit einer Schnittstelle (13), wobei das Daten-Management-System (1) ausgebildet ist, über die Schnittstelle (13) mit einem elektrischen Eingabegerät (3) drahtlos zu kommunizieren, über das die Regel- oder Steuereinheit (12) konfigurierbar ist.

2. Verfahren zum Regeln oder Steuern eines Haushaltsgeräts (2), **dadurch gekennzeichnet, dass** ein Haushaltsgerät mittels des Daten-Management-Systems (1) gemäß Anspruch 1 geregelt oder gesteuert wird.

3. Verfahren System nach Anspruch 2, **dadurch gekennzeichnet, dass** ein erstes Haushaltsgerät der Mehrzahl an Haushaltsgeräten (2) mit dem Kommunikationsmodul (11) kommuniziert und ein zweites Haushaltsgerät der Mehrzahl an Haushaltsgeräten (2) mittels der Regel- oder Steuereinheit (12) geregelt oder gesteuert wird.

4. Verfahren nach Anspruch 3, **dadurch gekennzeichnet, dass** das erste Haushaltsgerät bei Änderung seines Betriebszustands eine Statusmeldung an das Daten-Management-System (1) sendet und das Daten-Management-System (1) in Abhängigkeit der Statusmeldung einen Regel- oder Steuerbefehl an das zweite Haushaltsgerät sendet.

5. Verfahren nach Anspruch 4, **dadurch gekennzeichnet, dass** der Regel- oder Steuerbefehl anhand über die Schnittstelle (13) drahtlos empfangener Daten von dem elektrischen Eingabegerät (3) konfiguriert ist.

6. Verfahren nach Anspruch 5, **dadurch gekennzeichnet, dass** der Regel- oder Steuerbefehl in dem Daten-Management-System (1) ausführbar gespeichert wird, bis er durch über die Schnittstelle (13) empfangene Daten des elektrischen Eingabegeräts (3) geändert oder gelöscht wird.

7. Verfahren nach einem der vorangehenden Ansprüche, **dadurch gekennzeichnet, dass** die Mehrzahl an Haushaltsgeräten (2) ausgewählt ist aus der Gruppe, bestehend aus Waschmaschine, Waschtrockner, Trockner, Geschirrspüler (23), Backofen (22), Dampfgarer (21) und/oder Dunstabzugshaube (24).

8. Verfahren nach einem der vorangehenden Ansprüche 3 bis 7, **dadurch gekennzeichnet, dass** die Regel- oder Steuereinheit (12) einen Betriebszustand des zweiten Haushaltsgeräts der Mehrzahl der Haushaltsgeräte (2) in Abhängigkeit eines Betriebszustands des ersten Haushaltsgeräts der Mehrzahl der Haushaltsgeräte (2) regelt oder steuert.

9. Verfahren nach Anspruch 8, **dadurch gekennzeichnet, dass** mit Beginn eines Betriebs des ersten Haushaltsgeräts ein Betrieb des zweiten Haushaltsgeräts begonnen wird oder dass mit Ende des Betriebs des ersten Haushaltsgeräts ein Betrieb des zweiten Haushaltsgeräts begonnen wird.

10. Verfahren nach einem der Ansprüche 3 bis 9, **dadurch gekennzeichnet, dass** das zweite Haushaltsgerät die Dunstabzugshaube (24) ist.
